# FASCICULE DE BREVET EUROPEEN

(11) **EP 0 610 142 B1**
(45) Date de publication et mention de la délivrance du brevet: **14.04.1999**
(21) Numéro de dépôt: 94400244.3
(22) Date de dépôt: 04.02.1994
(51) Int. Cl.: C02F 1/48

(54) **Dispositif magnétique de traitement du bicarbonate de calcium contenu dans l'eau d'une canalisation**
Magnetisch arbeitende Vorrichtung zur Behandlung von Kalziumbikarbonate enthaltendem Leitungswasser
Magnetic device for the treatment of calcium bicarbonate containing water in conduits

(30) Priorité: 05.02.1993 FR 9214223
(43) Date de publication de la demande: 10.08.1994
(73) Titulaire: Thoraval, Gilles, F-36260 Reuilly (FR)
(72) Inventeur: Thoraval, Gilles, F-36260 Reuilly (FR)
(74) Mandataire: Bruder, Michel

(56) Documents cités:
- WO-A-91/01277
- DE-U- 9 001 355
- FR-A- 2 675 138
- GB-A- 2 209 030
- GB-A- 2 257 932
- GB-A- 2 261 834
- US-A- 4 367 143
- US-A- 4 605 498
- US-A- 4 946 590

## Description

L'invention concerne un dispositif destiné à réduire, voire supprimer les dépôts de tartre dans les canalisations, les appareils de chauffage, chauffes-eau, robinets et plus généralement, toutes machines industrielles ou appareils ménagers qui utilisent de l'eau contenant du bicarbonate de calcium.

On sait en effet, que le bicarbonate de calcium, lorsqu'il subit un choc thermique, c'est-à-dire une variation de température, cristallise partiellement ou entièrement sous la forme de calcite, vulgairement appelé tartre, c'est-à-dire sous la forme d'un cristal de carbonate triaxe qui présente une grande aptitude à adhérer sur toutes les parois des canalisations et autres appareils de chauffage, aboutissant, par dépôts successifs, à un entartrage souvent rédhibitoire.

On connaît bien, depuis longtemps, de nombreuses solutions pour éviter de tels phénomènes d'entartrage, solutions qui peuvent être regroupées en deux grandes catégories :
- les solutions consistant à opérer une captation des ions chimiques de calcium au moyen, le plus connu, de résines échangeuses d'ions permettant d'éliminer, purement et simplement, la formation de calcite.
- les solutions visant à apporter aux ions de bicarbonate une énergie suffisante pour modifier la structure cristalline du carbonate de calcium ; on peut noter, à cet égard, que l'apport d'énergie peut être réalisé au moyen de systèmes électro-statiques ou, plus couramment, au moyen de systèmes magnétiques.

La présente invention appartient à cette dernière catégorie à propos de laquelle de très nombreuses études ont été réalisées dès 1946 par PURCELL, TORREY et POUND (voir Physical Reviews 69,37 - 1946) ou encore par BLOCH HANSEN et PACKARD dans la même revue 69,127 - 1946.

Pour l'essentiel, il s'agit de procédés qui, grâce à un champ magnétique plus ou moins intense, permettent de modifier la molécule de bicarbonate de calcium contenue dans un fluide circulant, par exemple, dans une canalisation en provoquant une cristallisation naissante ou complète de molécules de carbonate de calcium uniaxe magnétique, autrement appelées aragonites (qui n'est autre qu'un carbonate de calcium à cristaux orthorhombiques) et ce, en lieu et place d'une habituelle cristallisation de calcite qui n'est autre qu'un carbonate de calcium à cristaux rhomboédriques (autrement appelé tartre) ; l'avantage de cette modification est que l'aragonite ne se fixe plus d'une manière incrustante comme le calcite ou le tartre, mais au contraire s'élimine dans le flux d'eau.

On connaît quelques réalisations antérieures de dispositifs permettant le traitement magnétique de l'eau : il s'agit notamment du brevet US-A 4.605.498 où il est clairement décrit un dispositif mettant en oeuvre des aimants pouvant être disposés en regard des uns des autres autour de la canalisation à traiter ; les aimants qui peuvent être alternativement disposés face SUD ou face NORD en regard, sont maintenus entre eux par un surmoulage plastique avantageusement suivant deux demi-coquilles semi torriques maintenues entre elles par de simples vis ; par la nature même du surmoulage plastique utilisé, les aimants sont relativement éloignés de la zone de traitement et plus spécialement de la partie intérieure de la canalisation. US-A 4.367.143 concerne également un appareil pour le traitement magnétique des liquides à l'intérieur d'une canalisation. Les aimants sont au contact direct de la canalisation.

Selon la présente invention, il est proposé un dispositif magnétique pour le traitement de l'eau circulant dans une canalisation, apte à provoquer lors d'une cristallisation du bicarbonate de calcium triaxe, sa mutation totale ou partielle en cristal d'aragonite uniaxe non incrustant, comprenant au moins une paire d'aimants permanents disposés en regard, de part et d'autre de ladite canalisation, suivant le même axe magnétique coïncidant avec un diamètre de ladite canalisation, lesdits aimants étant maintenus autour de celle-ci par un étrier de fixation, étant disposés de telle sorte que leurs pôles en regard de part et d'autre de la canalisation soient de même nom ce dispositif étant caractérisé en ce que les aimants sont des ferrites anisotropes choisies parmi les oxonyte 290 ou les terres-rares disposées au contact de la canalisation et magnétiquement isolées de celles-ci par un revêtement fin choisi parmi les peintures ou les résines époxy.

L'introduction d'un film isolant entre la partie en contact des aimants et la canalisation crée nécessairement un entrefer qu'il convient de compenser par la qualité des ferrites qui seront particulièrement choisi parmi les terres-rares ou les oxonytes en raison de ce qu'elles procurent un champ magnétique particulièrement intense.

De nombreux essais ont été réalisés avec le dispositif selon l'invention et, les meilleurs résultats ont été obtenus avec des dispositifs dont la polarité des faces des ferrites en contact avec la canalisation était du type SUD.

Bien entendu et comme prévu dans la littérature à cet égard, l'intensité du champ magnétique en fonction de la taille de la canalisation à traiter ou encore du débit du fluide dans ladite canalisation, peut être ajustée comme dans la solution préconisée dans le brevet US-4.946.590, par empilage successif d'aimants disposés en série les uns sur les autres de telle manière, par conséquent, qu'une face NORD d'un premier aimant coïncide avec une face SUD de l'aimant immédiatement au dessus ou au dessous.

D'autres caractéristiques ou avantages ressortiront mieux de la description complète d'une variante préférée du dispositif conforme à l'invention qui va maintenant être donnée à titre d'illustration non limitative de l'invention en référence au dessin annexé sur lequel :
- la figure 1 est une vue éclatée et en perspective, de la version élémentaire du dispositif magnétique selon l'invention,
- la figure 2 est une vue éclatée en perspective montrant une variante du dispositif comportant un empilage d'aimants destiné au renforcement de l'intensité du champ magnétique fourni par le dispositif,
- la figure 3 est une vue en perspective du dispositif élémentaire selon l'invention en position réelle de fonctionnement.

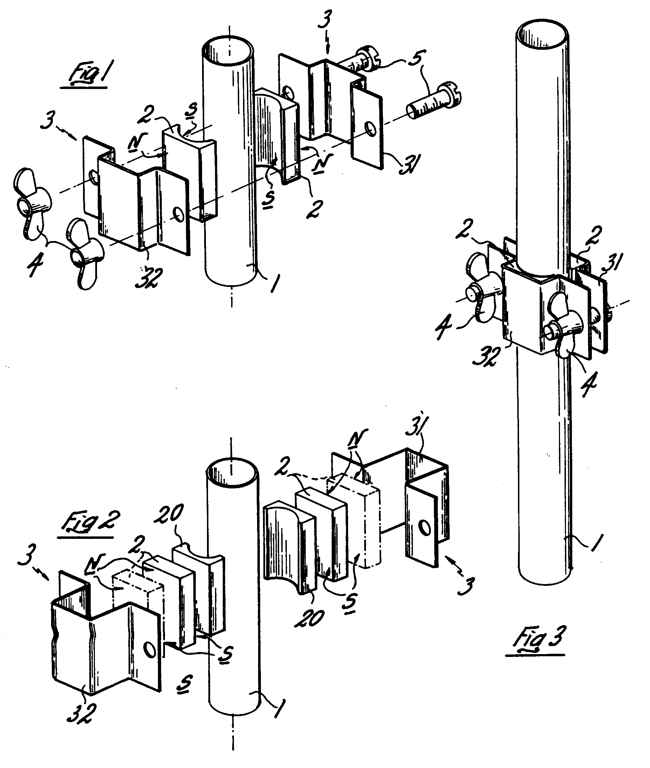

Conformément aux figures 1 et 3, le dispositif selon l'invention permettant le traitement du bicarbonate de calcium contenu dans l'eau circulant dans une canalisation 1 comprend deux aimants permanents 2 disposés de part et d'autre de la canalisation 1 de telle manière que les axes magnétiques des deux aimants coïncident entre eux selon une direction coïcidant elle-même avec un diamètre de la canalisation 1 ; les deux aimants permanents 2 sont en outre disposés de telle manière que leur face SUD soit en contact avec la face extérieure de ladite canalisation 1, ces deux aimants 2 ainsi positionnés ont tendance à se repousser mutuellement ; un étrier 3 comportant deux flasques symétriques 31-32 est positionné autour des aimants 2 afin de les maintenir autour de la canalisation 1 grâce au serrage procuré par deux vis 5 à ailettes 4 traversant des épanouissements latéraux prévus sur chaque flasque 31-32 pour venir collaborer au serrage contrôlé de l'ensemble étrier 3/aimant 2 autour de la canalisation 1. Naturellement, les deux flaques 31-32 de l'étrier 3 sont montés de telle manière qu'une fois l'ensemble serré, aucun contact mécanique n'existe entre eux afin d'éviter tout court-circuit magnétique entre les deux aimants 2, ce qui aurait comme conséquence préjudiciable de contribuer à la désaimantation beaucoup plus rapide desdits aimants permanents 2.

Les vis de serrage 4,5 sont de ce fait réalisées en une matière amagnétique permettant d'éviter tout court-circuit magnétique entre les deux flasques 31 et 32. On notera, en variante du dispositif qui vient d'être décrit, que les flsaques 31-32 constituant l'étrier 3 pourrait être avantageusement réalisés en une matière amagnétique, par exemple en plastique ou en métal inoxydable, ou encore ceux-ci pourraient être purement et simplement remplacés par un collier élastique venant tout simplement enserrer les deux aimants 2 autour de la canalisation 1.

Suite à de nombreux essais qui ont été réalisés avec ce montage de base, on s'est aperçu que le meilleur résultat du dispositif conforme à l'invention était obtenu en donnant aux faces des aimants 2 venant en appui contre la canalisation 1 une forme concave assurant une meilleure répartition radiale du flux magnétique vers le centre de la canalisation 1 ; il est clair qu'une telle forme concave pourrait être obtenue par une pièce métallique constituant un épanouissement polaire sur lequel on vient plaquer chaque aimant permanent 2 dont la forme est alors limitée à un simple parallélépipède rectangle ; on observera qu'une telle solution peut être plus rentable dès lors que la fabrication de ferrites concaves pose dans certains cas des problèmes de réalisation technique ; en outre, l'adjonction de pièces polaires métalliques permet d'adapter plus justement encore le dispositif à toutes sections de canalisations 1.

Selon une caractéristique importante de l'invention, les aimants permanents 2 sont choisis parmi les ferrites à haut pouvoir d'aimantation et à molécules orientées électro-magnétiquement, c'est-à-dire des ferrites anisotrope ; on sait que dans ce cas, le champ magnétique après magnétisation définitive a une direction perpendiculaire à la pièce aimantée, ce qui permet d'adapter plus surement la direction du flux à l'utilisation envisagée.

Selon encore une variante, toutefois moins avantageuse, de l'invention, les deux aimants 2 peuvent être disposés face au NORD en regard mais leur efficacité est, dans ce cas, légèrement moindre par rapport à celle que l'on a pu relever avec des montages comportant des aimants 2 dont les faces SUD sont en regard.

Suivant une caractéristique supplémentaire de l'invention, les faces des aimants 2 venant en contact avec la canalisation 1 sont revêtues d'un film isolant, assurant outre une protection contre l'oxydation de ces mêmes pièces, une isolation magnétique desdits aimants 2 par rapport à la canalisation 1. En effet, lorsque ladite canalisation 1 est en matériau ferromagnétique, il est avantageux de prévoir une isolation entre les aimants et la canalisation, car à l'inverse, on observe une diminution beaucoup plus rapide de l'effet magnétique de ces mêmes aimants.

Conformément à la figure 2, il est possible de réaliser en variante du dispositif précédemment décrit, un dispositif plus complexe permettant d'ajuster l'intensité du champ magnétique au volume d'eau à traiter passant dans la canalisation 1.

Pour ce faire, il est retenu suivant l'invention, de disposer de part et d'autre de la canalisation 1, des aimants supplémentaires de forme simple, avantageusement parallélépipèdique. Chaque aimant supplémentaire 2, en nombre théoriquement illimité, est disposé de telle manière qu'une face NORD coïncide avec la face SUD de l'élément précédent (ou suivant le cas échéant), ainsi l'empilage se maintient par l'attraction naturelle des aimants entre eux.

Naturellement, les flasques 31-32 de l'étrier 3 sont adaptés pour correspondre à l'empilage finalement retenu autour de la canalisation 1 dont on souhaite ce traitement ; il est à la portée de l'Homme du Métier d'ajuster ledit étrier 3 pour venir correctement assembler les aimants 2 ainsi disposés.

Il est évident qu'on retrouve dans cette variante toutes les caractéristiques secondaires qui ont été détaillées à propos du dispositif de base, à savoir la possibilité de remplacer les aimants particuliers qui viennent en contact avec la canalisation par des pièces polaires métalliques (référence 20 sur la figure 2) permettant d'ajuster la direction du champ magnétique à partir d'aimants obtenus simplement suivant la forme d'un parallélépipède rectangle ; en outre, qu'il s'agisse de pièces polaires métalliques ou de l'aimant mis en forme concave sur sa face d'appui, il est important de prévoir un revêtement isolant entre lesdites faces de contact et la canalisation dès lors que celle-ci est magnétiquement perméable des caractéristiques magnétiques, un tel revêtement peut être obtenu par une simple peinture ou encore par une résine époxy comme cela a été dit plus haut.

Il est bien entendu possible de réaliser quantité de variantes du dispositif magnétique conforme à l'invention qui vient d'être décrit : par exemple il est possible, même si cela n'est pas avantageux en première analyse, de réaliser un montage de base comportant un élément concave d'un côté et un élément plan de l'autre, venant directement en contact sur la canalisation ou par l'intermédiaire d'une ou deux pièces métalliques polaires 20. On pourrait aussi réaliser un dispositif non symétrique ne comportant pas de part et d'autre de la canalisation 1 un même nombre d'aimants 2 et ce pour autant que la polarité des faces en contact de la canalisation soit toujours de même polarité et préférentiellement de même polarité SUD.

Enfin, il a été obtenu d'excellents résultats en utilisant pour les aimants permanents 2 des ferrites du type "terre-rares" et plus particulièrement des ferrites anisotropes connues sous le nom d'oxonyte 290.

## Revendications

1. Dispositif magnétique pour le traitement de l'eau circulant dans une canalisation (1), comprenant au moins une paire d'aimants permanents (2) disposés en regard de part et d'autre de ladite canalisation (1) suivant le même axe magnétique coïncidant avec un diamètre de ladite canalisation (1), lesdits aimants (2), maintenus autour de la canalisation (1) par un étrier de fixation (3), étant disposés de telle manière que leurs pôles en regard soient de même nom, **caractérisé** en ce que les aimants (2) sont des ferrites anisotropes choisies parmi les oxonyte 290, ou les terres-rares disposées au contact de la canalisation (1) et magnétiquement isolées de celle-ci par un revêtement fin choisi parmi les peintures ou les résines époxy.

2. Dispositif selon la revendication 1 **caractérisé** en ce que les pôles en regard des aimants (2) disposés de part et d'autre de la canalisation sont des pôles SUD.

3. Dispositif selon l'une quelconque des revendications précédentes **caractérisé** en ce que l'étrier de fixation (3) est un collier plastique.

4. Dispositif selon l'une quelconque des revendications 1 ou 2 **caractérisé** en ce que l'étrier de fixation (3) est constitué de deux flasques (31-32) venant chacun épouser la forme extérieure des aimants (2) et présentant chacun au moins un épanouissement latéral muni d'un élément adéquat (4) qui vient coopérer avec l'élément complémentaire de l'autre flasque pour procurer un serrage suffisant des aimants (2) autour de la canalisation (1).

5. Dispositif selon la revendication précédente **caractérisé** en ce que les flasques (31-32) sont indifféremment en plastique ou en métal et qu'ils comportent deux épanouissement latéraux dont le rapprochement, sans contact, par des vis (4-5) non magnétiques procure le serrage de l'ensemble.

6. Dispositif selon l'une quelconque des revendications précédentes **caractérisé** en ce que l'intensité du champ magnétique peut être ajusté par des empilages adéquats d'aimants (2) supplémentaires rapportés d'un côté et/ou de l'autre de la canalisation (1) à traiter de telle manière que les faces desdits aimants (2) en contact soient de polarité opposée assurant leur automaintien par attraction mutuelle.

7. Dispositif selon l'une quelconque des revendications précédentes **caractérisé** en ce que la forme d'une au moins des faces des aimants (2) en contact avec la canalisation (1) soit concave.

## Claims

1. A magnetic device for the treatment of water passing through a pipeline (1), comprising at least one pair of permanent magnets (2) arranged facing one another on either side of said pipeline (1) following the same magnetic axis that is coincident with a diameter of said pipeline (1), said magnets (2), being held around the pipeline (1) by a fixing bracket (3), and being arranged in such a way that their poles of the same polarity are opposite one another, characterised in that the magnets (2) are anisotropic ferrite magnets chosen from among the oxonytes 290 or the rare earths arranged in contact with the pipeline (1) and magnetically insulated from it by a thin coating chosen from among the epoxy paints or resins.

2. A device according to Claim 1, characterised in that the poles of the magnets (2) facing one another and arranged on either side of the pipeline are SOUTH poles.

3. A device according to either one of the preceding Claims characterised in that the fixing bracket (3) is a plastic collar.

4. A device according to either one of Claims 1 or 2 characterised in that the fixing bracket (3) is made up of two cheeks (31-32) that come together to marry up with the external shape of the magnets (2) and that each has at least one part that opens out laterally fitted with an element (4) that is suitable for co-operating with the complementary element of the other cheek so as to provide sufficient clamping of the magnets (2) around the pipeline (1).

5. A device according to the preceding Claim characterised in that the cheeks (31-32) are equally well made of plastic or metal and that they comprise two parts that extend laterally and which when they are brought towards one another, without making contact, by non-magnetic nuts (4-5) they cause the assembly to be clamped.

6. A device according to any one of the preceding Claims characterised in that the intensity of the magnetic field can be adjusted by appropriate stacking of extra detachable magnets (2) on one side and/or the other side of the pipeline (1) to be treated in such a way that the faces of said magnets that are in contact are of opposite polarity so that they are automatically held by their mutual attraction.

7. A device according to any one of the preceding Claims characterised in that the shape of at least one of the faces of the magnets (2) in contact with the pipeline (1) is concave.

## Patentansprüche

1. Magnetische Vorrichtung für die Aufbereitung des in einer Leitung (1) fliessenden Wassers, mit mindestens einem Paar Dauermagneten (2), die beidseitig gegenüber der besagten Leitung (1) angeordnet sind, nach der gleichen, mit dem Durchmesser der besagten Leitung (1) deckungsgleichen Magnetachse, wobei die besagten Magneten (2), die von einem Befestigungsbügel (3) um die Leitung (1) herum festgehalten werden, so angeordnet sind, dass ihre gegenüberliegenden Pole das gleiche Zeichen aufweisen, dadurch gekennzeichnet, dass die Magneten (2) anisotropische Ferrite sind, die unter den Oxoniten 290 oder den seltenen Erden gewählt und in Kontakt mit der Leitung (1) angeordnet werden, wobei sie magnetisch durch eine dünne, unter den Farben oder den Epoxy-Harzen gewählte Beschichtung von ihr getrennt sind.

2. Vorrichtung nach Anspruch 1, dadurch gekennzeichnet, dass die den Magneten (2) gegenüberliegenden, auf beiden Seiten der Leitung angeordneten Pole SUD-Pole sind.

3. Vorrichtung nach einem der vorstehend genannten Ansprüche, dadurch gekennzeichnet, dass der Befestigungsbügel (3) eine Plastikschelle ist.

4. Vorrichtung nach einem der Ansprüche 1 oder 2, dadurch gekennzeichnet, dass der Befestigungsbügel (3) aus zwei Flanschen (31-32) besteht, die jeweils die Aussenform der Magneten (2) umgeben, und jeweils mindestens eine seitliche Ausbauchung aufweisen, die mit einem geeigneten Element (4) bestückt ist, das mit dem entsprechenden Element des anderen Flansches zusammenwirkt, um eine ausreichende Spannung der Magneten (2) um die Leitung (1) herum zu gewährleisten.

5. Vorrichtung nach dem vorstehend genannten Anspruch, dadurch gekennzeichnet, dass die Flansche (31-32) entweder aus Plastik oder aus Metall bestehen, und dass sie zwei seitliche Ausbauchungen aufweisen, deren kontaktlose Annäherungen mittels unmagnetischen Schrauben (4-5) die Spannung der Baugruppe gewährleisten.

6. Vorrichtung nach einem der vorstehend genannten Ansprüche, dadurch gekennzeichnet, dass die Intensität des Magnetfeldes durch geeignete Stapelungen von zusätzlichen Magneten (2) auf der einen und/oder der anderen Seite der zu behandelnden Leitung (1) eingestellt werden kann, so dass die Flächen der besagten in Kontakt stehenden Magneten (2) die gegenteilige Polarität aufweisen und damit ihren Selbsthalt durch gegenseitige Anziehung gewährleisten.

7. Vorrichtung nach einem der vorstehend genannten Ansprüche, dadurch gekennzeichnet, dass die Form von mindestens einer der mit der Leitung (1) in Kontakt stehenden Flächen der Magnete (2) konkav ist.
